# EUROPÄISCHE PATENTSCHRIFT

(11) **EP 4 036 529 B1**
(45) Veröffentlichungstag und Bekanntmachung des Hinweises auf die Patenterteilung: **30.11.2022**
(21) Anmeldenummer: 21210866.6
(22) Anmeldetag: 26.11.2021
(51) Int. Cl.: G01D 5/245, G01D 5/246

(54) **BESTIMMUNG EINER POSITION**
DETERMINATION OF A POSITION
DÉTERMINATION D'UNE POSITION

(30) Priorität: 29.01.2021 DE 102021102053
(43) Veröffentlichungstag der Anmeldung: 03.08.2022
(73) Patentinhaber: SICK AG, 79183 Waldkirch (DE)
(72) Erfinder: Hopp, David, 78166 Donaueschingen (DE)

(56) Entgegenhaltungen:
- DE-A1- 10 028 136
- DE-A1-102012 209 537
- DE-A1-102012 212 767
- DE-C1- 19 711 218

## Beschreibung

Die Erfindung betrifft eine Gebervorrichtung und ein Verfahren zur Bestimmung der Position eines ersten Objekts relativ zu einem zweiten Objekt nach dem Oberbegriff von Anspruch 1 beziehungsweise 15.

Bei Gebervorrichtungen werden lineare und rotatorische Systeme unterschieden. Ein Lineargeber bestimmt eine Verschiebung auf einer Achse. Ein Drehgeber, Drehwinkelsensor oder Encoder dient dagegen der Erfassung eines Drehwinkels oder einer Winkelstellung beispielsweise einer Welle eines Antriebselements. Ein wichtiges Anwendungsfeld sind sogenannte Motor-Feedback-Systeme, wo der Drehgeber in einem Servomotor die Ist-Drehzahl an die Regelung rückmeldet.

In der Gebervorrichtung wird jeweils eine Maßverkörperung abgetastet, die längs der linearen Achse beziehungsweise an der Welle mitdrehend angebracht ist. Die Maßverkörperung fungiert als Modulator und erzeugt über die Relativbewegung eine Intensitätsmodulation in einem Abtastsensor. Oft gibt es mehr als eine abgetastete Codespur, oder die vorhandene Codespur wird mehrfach abgetastet. So sind Sin/Cos-Geber verbreitet, die zwei analoge Ausgangssignale mit einem positionsabhängigen sinusförmigen beziehungsweise cosinusförmigen Verlauf zur Verfügung stellen. Die Phase und die Anzahl Perioden dieser Signale repräsentieren jeweils mit einem 90°-Versatz die gesuchte Position. In der Auswertung wird die Position mittels der Arkustangens-Funktion unter Berücksichtigung der Vorzeichen der Quadranten berechnet. Manche Systeme nutzen eine größere Anzahl Empfangselemente, um beispielsweise differentielle Signale mit zusätzlichen negativen Sinus- und Cosinussignalen zu gewinnen, oder andere Phasenunterschiede wie 120°. Auch nicht sinusförmige Modulationen sind bekannt.

Für die zugrundeliegenden Sensorprinzipien werden verschiedene Technologien eingesetzt. Die Maßverkörperung optischer Gebervorrichtungen ist eine relativ zu einem Lichtsender und dem Abtastsensor rotierende Codescheibe oder ein entsprechender langgestreckter Codekörper. Für Durchlicht bei Transmissionsanordnung von Lichtsender und Abtastsensor sind optisch transparente und nichttransparente Bereiche beziehungsweise für Auflicht bei Reflexionsanordnung von Lichtsender und Abtastsensor reflektierende und absorbierende Bereiche vorgesehen. Diese Bereiche oder Codeelemente können Öffnungen, reflexive und diffraktive Strukturen, Prismen, in Durchlässigkeit, Reflexivität, Grauton oder Farbe variierende Strukturen und sonstige optisch unterscheidbare Elemente sein. Zusammen ergeben die Codeelemente eine Codespur oder Maßspur. Magnetische Gebervorrichtungen detektieren beispielsweise mit einem HallSensor die Drehbewegung entsprechender magnetischer Strukturen beziehungsweise codierender Permanentmagneten. Es sind weitere physikalische Wirkprinzipien für Positionsmessungen geeignet, beispielhaft genannt seien noch kapazitive und induktive Gebervorrichtungen.

Auf funktionaler Ebene kann man inkrementelle und absolute Drehgeber unterscheiden. Ein inkrementelles System erlaubt insbesondere beim Einschalten des Winkelmesssystems keine eindeutige Positionsbestimmung, bietet dafür aber für gewöhnlich eine wesentlich höhere Auflösung und Genauigkeit. Eine eindeutige Winkelinformation über eine Umdrehung hinweg ergibt sich nur bei einer absolut erfassten Position. Eine ergänzende Positionsinformation bei Winkelmesssystemen ist die Anzahl der Umdrehungen. Das wird dann als Multiturn-Drehgeber bezeichnet. Es gibt aber eine ähnliche Anwendung bei linearen Gebervorrichtungen, etwa um wiederkehrende und damit zunächst nicht eindeutige Positionssegmente zu identifizieren.

Ist sowohl eine inkrementelle als auch eine absolute Winkelinformation erwünscht, muss zusätzlich zu der inkrementellen Winkelerfassung die Möglichkeit einer absoluten Winkelerfassung implementiert werden. Herkömmlich wird dies häufig durch eine Erweiterung der Maßverkörperung und zusätzliche Abtastsensoren erreicht. Es gibt dafür eine Reihe von geeigneten Codierungen für die Maßverkörperung, wie binäre Codes, Gray-Codes, Pseudo-Random-Codes oder auch Noniusansätze. Weiterhin können zwei unabhängige Winkelmesssysteme miteinander kombiniert werden, wobei eines davon den absoluten Winkel erfasst. Bei magnetischen Systemen kann beispielsweise ein diametral magnetisierter Magnet eingesetzt werden.

Die Implementierung einer zusätzlichen Möglichkeit zur absoluten Winkelerfassung ist aufwändig und bedeutet in den meisten Fällen mehr Kosten und eine Einschränkung der mechanischen Toleranzen durch die Notwendigkeit aufwändigerer Maßverkörperungen, wenn darauf beispielsweise mehrere Codespuren nebeneinander Platz finden müssen. In manchen Fällen besteht eine technische Herausforderung, überhaupt eine passende Lösung für eine absolute Winkelerfassung bereitzustellen. Bei großen Wellen oder Hohlwellen beispielsweise muss die absolute Winkelerfassung je nach gewünschtem Durchmesser angepasst werden, während die inkrementelle Winkelerfassung sehr einfach über die Anzahl ihrer Inkremente skaliert werden kann. Bei linearen Positionsmesssystemen stellt die Messlänge beziehungsweise deren Skalierung eine entsprechende Schwierigkeit dar. Speziell bei einer hohen Variantenvielfalt entsprechender Produkte zur Winkelerfassung ist daher die Absoluterfassung mit hohem Aufwand verbunden.

Es ist bekannt, in einem Drehgeber eine Exzentrizität auszunutzen, um eine Absolutposition zu bestimmen. In der DE 10 2004 026 476 A1 werden zwei Magnetscheiben verwendet, von denen eine konzentrisch und eine exzentrisch ist. An der exzentrischen Magnetscheibe wird vom Rand her mit ersten Magnetfelddetektoren der radiale Abstand gemessen, aus dem sich wegen der Exzentrizität auf die Winkelstellung schließen lässt. Zweite Magnetfelddetektoren verbessern die Auflösung durch Abtastung der konzentrischen Magnetscheibe. Dies löst aber das Problem der erhöhten Komplexität für die Bestimmung einer absoluten Winkelposition nicht, da mit den beiden Magnetscheiben sowie den ersten und zweiten Magnetfelddetektoren, wenn auch auf etwas unüblichere Art, doch wieder zwei Systeme miteinander kombiniert werden. Auch die DE 10 2005 021 300 B4 misst den radialen Abstand zu einer exzentrisch gelagerten kreisförmigen Scheibe. Hier wird schlicht auf ein inkrementelles System ganz verzichtet, womit sich die Komplexität nur um den Preis einer vergleichsweise geringen Genauigkeit verringert. In alternativen Ausführungsformen wird eine elliptische Scheibe oder eine zu der Drehachse geneigte Kreisscheibe verwendet, was beides keine guten Laufeigenschaften verspricht und auch am Fehlen einer inkrementellen Messinformation nichts ändert.

Die noch unveröffentlichte deutsche Patentanmeldung mit dem Aktenzeichen 10 2020 128 727.5 verwendet in einem Drehgeber mehrere um den Umfang einer Maßverkörperung verteilt angeordnete Abtasteinheiten, die eine tatsächliche oder über ungleiche Längen der Inkremente emulierte Exzentrizität aufweist. Aus deren Abtastsignalen kann zum einen eine inkrementelle Position bestimmt werden. Außerdem werden zwei gegeneinander phasenversetzte gemeinsamen Signale erzeugt, die entsprechend der Exzentrizität modulieren und eine zusätzliche absolute Positionsbestimmung ermöglichen. Nachteilig hieran ist, dass die Exzentrizität einen künstlichen Messfehler einführt, auch wenn dieser Messfehler kompensierbar ist.

Aus der DE 100 28 136 A1 ist ein Positionsmesssystem mit mehreren Inkrementalspuren bekannt, wobei diese Teilspuren phasenversetzt von einem Sensorsystem abgetastet werden. Die Strichbreiten der periodischen Strichstruktur der Inkrementalspur werden nach einer oszillierenden Funktion variiert, um die Strichstruktur mit einer Absolutpositionsinformation zu überlagern. Das erfolgt für jede Teilspur unterschiedlich mit einem eigenen Phasenversatz. Dabei besteht entlang der Inkrementalspur ein konstantes Strichbreiten-Lücke-Verhältnis. Durch die Vielzahl von Teilspuren und die für deren Abtastung erforderliche Sensorik wird das System aber recht komplex.

Die WO 2013/182644 A1 stellt einen Inkrementalgeber vor, bei dem durch ein vorbestimmtes Codiermuster eine Zusatzkodierung auf das Messsignal moduliert wird. Die dadurch eingeprägte Zusatzinformation dient zur Sicherheitserhöhung und kann eine Richtungsinformation, eine Information zur Absolutlage der Maßverkörperung und/oder eine Information zur Identifikation des Inkrementalgeber umfassen. Durch die Zusatzkodierung entsteht jedoch eine unregelmäßige Anordnung von Codeelementen, mit ähnlichen Nachteilen wie bei einer emulierten Exzentrizität.

In der DE 10 2012 767 A1 wird eine Positionsmesseinrichtung vorgestellt, in der mit mehreren Detektoren Codespuren für eine Absolutposition und Inkrementalspuren abgetastet werden.

Die DE 197 11 218 C1 befasst sich mit der Übertragung von Daten zwischen einer Positionsmesseinrichtung und einer Auswerteeinheit. Die Positionsmesseinrichtung weist zwei Teilmesssysteme für die Bestimmung inkrementeller beziehungsweise absoluter Positionsdaten auf.

Es ist daher Aufgabe der Erfindung, die Erfassung zusätzlicher Positionsinformationen über eine inkrementelle Position hinaus zu verbessern.

Diese Aufgabe wird durch eine Gebervorrichtung und ein Verfahren zur Bestimmung der Position eines ersten Objekts relativ zu einem zweiten Objekt nach Anspruch 1 beziehungsweise 15 gelöst. Die beiden Objekte sind gegeneinander in einer Längs- oder Drehrichtung beweglich, und die entsprechende Position oder Winkelstellung soll gemessen werden. Die Gebervorrichtung wird im Falle einer Linearbewegung auch als Lineargeber, im Falle einer Rotationsbewegung als Drehgeber, Drehwinkelsensor oder Encoder, bei Einsatz in einem Servomotor insbesondere als Motorfeedback-System bezeichnet, und das erste Objekt ist dann vorzugsweise eine Welle und das zweite Objekt ein stationärer Teil oder Gehäuse des Drehgebers. Aus der Position oder Winkelposition können abgeleitete Größen erzeugt werden, wie eine Geschwindigkeit oder Winkelgeschwindigkeit.

Mit dem ersten Objekt mitbewegt ist eine Maßverkörperung mit einer langgestreckten oder kreisförmigen Maßspur oder Codespur mit mindestens einem Positionssegment aus einer Vielzahl von inkrementellen Codeelementen oder Inkrementen verbunden. Ein Positionssegment deckt in einem linearen System einen gewissen Bereich ab, etwa einen Meter oder mehrere Meter oder einen Bruchteil davon. Dabei kann das Positionssegment dem gesamten Messbereich entsprechen, oder mehrere Positionssegmente ergänzen einander zu dem Messbereich. Entsprechendes gilt in einem Drehgeber, wo ein Positionssegment allein 360° umfasst oder über den Umfang hinweg mehrere Positionssegmente vorgesehen sind.

Eine erste inkrementelle Abtasteinrichtung ist mit dem zweiten Objekt verbunden und damit relativ zu der Maßverkörperung beweglich. Dabei sind erstes Objekt und zweites Objekt untereinander austauschbare Begriffe. Die erste inkrementelle Abtasteinrichtung umfasst mindestens zwei Einzelabtasteinheiten im gegenseitigen Phasenversatz zur Erzeugung eines jeweiligen Abtastsignals durch Erfassen der Codeelemente. Dieser Phasenversatz bezieht sich auf ein Inkrement, d.h. die Periode der inkrementellen Codeelemente.

Das Tastverhältnis der Abtastsignale ist gemäß einer Modulationsfunktion über das Positionssegment hinweg moduliert. Herkömmlich würde hingegen das Tastverhältnis konstant und meist auch bei 50% gehalten. Die Abtastsignale enthalten durch die Modulation des Tastverhältnisses eine zusätzliche Positionsinformation.

Eine Steuer- und Auswertungseinheit wertet die Abtastsignale aus. Die Steuer- und Auswertungseinheit umfasst beispielsweise eine oder mehrere Schaltungen beziehungsweise einen oder mehrere digitale Rechenbausteine, wie mindestens einen Mikroprozessor, FPGA (Field Programmable Gate Array) oder ASIC (Application-Specific Integrated Circuit). Es wird eine inkrementelle erste Positionsinformation aus den Abtastsignalen mindestens zweier Einzelabtasteinheiten gewonnen. Das entspricht der üblichen inkrementellen Auswertung, wobei die Abtastsignale exemplarisch als Sinus- und Cosinussignal betrachtet werden können, obwohl die Erfindung keinesfalls speziell auf diese Abtastsignale beschränkt ist. Es ist denkbar, die Bestimmung der inkrementellen ersten Positionsinformationen durch mehr als zwei Einzelabtasteinheiten zu verbessern. Zusätzlich wird eine zweite Positionsinformation aus der Modulation des Tastverhältnisses gewonnen. Dies kann je nach Ausführungsform eine absolute Positionsinformation oder eine zweite inkrementelle Positionsinformation mit anderer Periode beziehungsweise Periodenlänge sein.

Die Erfindung geht von dem Grundgedanken aus, die Modulation des Tastverhältnisses zweifach mit unterschiedlicher Phase zu messen. Dazu weist die Gebervorrichtung mindestens noch eine zweite inkrementelle Abtasteinrichtung auf, die ebenfalls in der Relativbewegung die Maßverkörperung abtastet, jedoch mit einem Phasenversatz. Dieser Phasenversatz ist nun nicht auf ein Inkrement bezogen, sondern auf das Positionssegment, das ja eine Vielzahl von Inkrementen umfasst. Die zweite inkrementelle Abtasteinrichtung umfasst ebenfalls mindestens zwei Einzelabtasteinheiten im gegenseitigen Phasenversatz zur Erzeugung jeweiliger Abtastsignale. Die Steuer- und Auswertungseinheit bestimmt nun die zweite Positionsinformation aus der zweifach mit Phasenversatz bestimmten Modulation des Tastverhältnisses der ersten inkrementellen Abtasteinrichtung und der zweiten inkrementellen Abtasteinrichtung.

Die Erfindung hat den Vorteil, dass auf Basis des Tastverhältnisses eine zweite Positionsinformation mit einem rein inkrementellen System bestimmt werden kann. Insbesondere kann so die absolute Winkelinformation aus einem inkrementellen System mit nur einer Maßspur gewonnen werden. Eine absolute Maßspur oder gar Maßverkörperung wird nicht benötigt, und dementsprechend auch keine Abtasteinheit dafür. Das ermöglicht kleinere und kostengünstigere Drehgeber. Nur eine Maßspur erleichtert auch erheblich den Umgang mit mechanischen Toleranzen, und eine inkrementelle Maßspur lässt sich in ihrer Auflösung und ihrem Durchmesser an verschiedene Drehgebervarianten anpassen. Auch die Anzahl der Positionssegmente ist skalierbar. Die Erfindung ist damit sehr gut für Hohlwellengeber mit großer Varianz an Durchmessern ebenso wie für lineare Systeme mit unterschiedlicher Messlänge geeignet.

Die Maßverkörperung weist bevorzugt nur ein Positionssegment auf, das sich über den Positionsmessbereich der Gebervorrichtung erstreckt, und wobei die zweite Positionsinformation eine absolute Positionsinformation ist. Der Positionsmessbereich ist der gesamte Längenmessbereich eines Lineargebers beziehungsweise der gesamte 360°-Winkelbereich eines Drehgebers. Wenn es nur ein einziges Positionssegment über den vollen Positionsmessbereich gibt, so lässt sich aus der Modulation auf die absolute Position schließen. Die zweite Positionsinformation misst somit eine absolute Position, die Gebervorrichtung wird ein Absolutgeber.

Die Maßverkörperung weist bevorzugt mehrere Positionssegmente auf, vorzugsweise untereinander gleichartige Positionssegmente. In dieser Alternative erstreckt sich der Eindeutigkeitsbereich der zweiten Positionsinformation nur über eines von mehreren Positionssegmenten, die nur gemeinsam den Positionsmessbereich überdecken, und es wird folglich keine absolute Position gemessen. Stattdessen ist nun die zweite Positionsinformation eine inkrementelle Positionsinformation mit einer zu der inkrementellen ersten Positionsinformation unterschiedlichen Periode oder Periodenlänge. Die mehreren Positionssegmente bilden demnach ein zweites Inkrementalsystem mit zu den inkrementellen Codeelementen unterschiedlicher Periodenzahl. Die erste inkrementelle Positionsinformation misst in Inkrementen entsprechend den Codeelementen, die zweite inkrementelle Positionsinformation in Inkrementen geringerer Positionsauflösung entsprechend den Positionssegmenten, die ja jeweils eine Vielzahl von inkrementellen Codeelementen umfassen. Bevorzugt werden Positionssegmente gezählt, insbesondre um eine Anzahl Umdrehungen in einem Multiturn-System zu erfassen. Dieses Zählen ist auch möglich, wenn es nur ein Positionssegment über den Positionsmessbereich gibt.

Die Steuer- und Auswertungseinheit ist bevorzugt dafür ausgebildet, aus den Abtastsignalen einer inkrementellen Abtasteinrichtung das Tastverhältnis zu rekonstruieren, insbesondere durch Addition der Abtastsignale der Einzelabtasteinheiten einer Abtasteinrichtung. Die Abtastsignale sind durch das modulierte Tastverhältnis verändert, aber die Modulation des Tastverhältnisses entsprechend der Modulationsfunktion kann den Abtastsignalen nicht unmittelbar entnommen werden. Deshalb ist die Steuer- und Auswertungseinheit vorzugsweise in der Lage, im Verlauf der Relativbewegung die Modulationsfunktion zu rekonstruieren, mit der Phasenlage und damit Position innerhalb des Positionssegments, das der Anordnung der jeweils messenden Abtasteinrichtung entspricht. Da die Abtasteinrichtungen im Phasenversatz zueinander angeordnet sind, ergibt die Rekonstruktion zwei zueinander versetzte, entsprechend dem Tastverhältnis modulierte Verläufe. Daraus wird dann die Position innerhalb des Positionssegments als die zweite Positionsinformation bestimmt.

Die Rekonstruktion erfolgt besonders bevorzugt durch Aufaddieren der Abtastsignale der Einzelabtasteinheiten einer Abtastvorrichtung. Das erfordert eine geeignete Phasenlage der Einzelabtasteinheiten zueinander, die unter anderem in noch vorzustellenden bevorzugten Ausführungsformen gegeben ist. Haben beispielsweise die Abtastsignale einen sinusförmigen Verlauf und werden zwei Abtastsignale mit 180° Phasenversatz erzeugt, so kompensieren die eigentlichen Signale einander bei der Addition, und nur das modulierte Tastverhältnis bleibt als Offset übrig.

Die Modulationsfunktion ist bevorzugt eine zumindest annähernd kontinuierliche Funktion, insbesondere eine periodische Funktion. Das aufmodulierte Tastverhältnis kann sich nur von Inkrement zu Inkrement ändern und bildet daher einen diskreten Verlauf oder eine Treppenfunktion. Die zugrundeliegende Modulationsfunktion ist aber vorzugsweise stetig und noch bevorzugter eine periodische Funktion. Vorzugsweise handelt es sich um eine vollständige Periode einer sinusartigen Funktion, es sind aber auch andere Verläufe denkbar, die beispielsweise nur einen Teil einer Periode umfassen. Es können an die Modulationsfunktion ähnliche Anforderungen gestellt werden wie an den Verlauf der einzelnen Abtastsignale. Die Steuer- und Auswertungseinheit erfasst dann über die beiden Modulationen des Tastverhältnisses der beiden inkrementellen Abtasteinrichtungen zwei zueinander phasenversetzte Signale, die wie in einem inkrementellen System ausgewertet werden können, dies jedoch mit dem größeren Eindeutigkeitsbereich nicht nur eines durch die Codeelemente vorgegebenen Inkrements, sondern des ganzen Positionssegments. Ist insbesondere die Modulationsfunktion sinusförmig und sind die inkrementellen Abtasteinrichtungen im Phasenversatz 90° angeordnet, so erzeugt die Modulation des Tastverhältnisses ein Sin/Cos-Signal, das wie in einem Inkrementalgeber über den Arkustangens ausgewertet werden kann.

Die Abtasteinrichtungen erfassen vorzugsweise dieselbe einzige Codespur aus inkrementellen Codeelementen der Maßverkörperung. Die gesamte hier in verschiedenen bevorzugten Ausführungsformen erläuterte erfindungsgemäße Positionsbestimmung beruht dann auf nur einer einzigen Codespur. Vorzugsweise befindet sich überhaupt keine weitere Codespur auf der Maßverkörperung, so dass sich ein besonders einfacher ein Gesamtaufbau ergibt. Die Erfindung schließt aber auch in der bevorzugten Ausführungsform mit Erfassung der jeweils selben, einzigen Codespur durch die Abtasteinrichtungen weitere Codespuren für andere Zwecke und ergänzende Messinformationen als die hier vorgestellte Messung nicht aus, oder die Kombination mehrerer erfindungsgemäßer Positionsbestimmungen anhand jeweils einer Codespur und dieser jeweiligen Codespur zugeordneter Abtasteinrichtungen.

Die Codeelemente sind bevorzugt in einem gleichmäßigen Abstand zueinander angeordnet. Die Codeelemente liegen folglich auf einem gleichmäßigen Raster, die Inkremente haben eine gleiche Periode beziehungsweise sind gleich lang und werden auch so erfasst. Das wäre bei einer physischen oder emulierten Exzentrizität eines Drehgebers anders. Prinzipiell könnte eine Exzentrizität und deren Auswertung auch mit der Erfindung kombiniert werden, aber in dieser bevorzugten Ausführungsform wird das vermieden.

Die Codeelemente und Lücken zwischen den Codeelementen variieren bevorzugt in ihrer Breite entsprechend der Modulationsfunktion. Das ist eine sehr einfache Umsetzungsmöglichkeit, um für eine Modulation des Tastverhältnisses zu sorgen. Im engeren Sinne haben Codeelemente selbst kein Tastverhältnis, das ist ein Begriff, der sich auf das Abtastsignal bezieht, aber die Codeelemente sind so ausgelegt, dass sich bei der Abtastung das Tastverhältnis ergibt, und über diesen Weg wird das Tastverhältnis dann doch wieder eine Eigenschaft der Codeelemente selbst. Sehr anschaulich gesprochen wird die Strichdicke der Codespur und in Folge die Ausdehnung der Lücken von Inkrement zu Inkrement verändert. Die Striche können Schlitze einer optischen Gebervorrichtung mit Anordnung im Durchlicht, Reflektoren bei Anordnung im Auflicht, Nord- und Südpole der Magnete für einen Hallsensor und entsprechende Strukturen bei einem anderen Sensorprinzip sein. Es ist zu beachten, dass sich der Begriff Breite auf die Richtung der Relativbewegung bezieht, nicht etwa auf eine dazu orthogonale Ausdehnung der Codespur als Ganzes. Das wäre in der hier gewählten Nomenklatur die Höhe eines Codeelements. Diese könnte zusätzlich oder alternativ moduliert werden, um daraus Positionsinformationen gewinnen, aber das führt zu keiner Modulation des Tastverhältnisses.

Die Codeelemente sind bevorzugt dafür ausgebildet, ein periodisches Abtastsignal zu erzeugen, insbesondere ein sinusförmiges Abtastsignal. Der Verlauf des Abtastsignals entsteht im Zusammenspiel mit der Ausgestaltung der Einzelabtasteinheiten. Beispielsweise können die Codeelemente rechteckig und eine lichtempfindliche Fläche der Einzelabtasteinheiten sinusförmig sein. Der sinusförmige Verlauf ist besonders geeignet und verbreitet und wird daher oft stellvertretend beschrieben, ohne dadurch andere Verläufe auszuschließen, außer es kommt speziell auf die Sinuseigenschaften an. Die Codeelemente beziehungsweise Inkremente sind vorzugsweise bis auf die Modulation des Tastverhältnisses untereinander gleich.

Die Einzelabtasteinheiten mindestens einer inkrementellen Abtasteinrichtung weisen zueinander bevorzugt einen Phasenversatz von 90° oder 120° eines durch den Abstand der Codeelemente gegebenen Inkrements auf. Allgemein genügt es für die Bestimmung der inkrementellen ersten Positionsinformation, wenn der Phasenversatz nicht ausgerechnet 0° oder 180° beträgt. Dabei hat eine Messung im Phasenversatz von 180° durchaus ihre Berechtigung, wie gleich im Anschluss erläutert, es müssen dann aber mehr als zwei Abtastsignale erfasst werden. Ein Phasenversatz von 90° wie in einem Sin/Cos-Geber liefert besonders gute Messinformationen, exemplarisch für einen anderen geeigneten Phasenversatz sind 120° genannt. Vorzugsweise gilt die genannte Phasenbedingung für alle inkrementellen Abtasteinrichtungen gleichermaßen, aber es ist nicht ausgeschlossen, davon abzuweichen, um beispielsweise eine Diversität in die Messung einzubringen.

Mindestens eine inkrementelle Abtasteinrichtung weist bevorzugt eine weitere Einzelabtasteinheit in einem Phasenversatz von 180° zu einer anderen Einzelabtasteinheit auf. Dieser Phasenversatz bezieht sich weiterhin auf ein Inkrement. Insbesondere können insgesamt vier Einzelabtasteinheiten bei 0°, 90°, 180° und 270° vorgesehen sein, die ein Sin-, Cos, -Sin, -Cos-Signal liefern. Ein anderes Beispiel sieht vier Einzelabtasteinheiten bei 0, 120°, 180° und 300° vor, oder sechs Einzelabtasteinheiten bei 0°, 60°, 120°, 180°, 240° und 300°. Die doppelte Abtastung im Phasenversatz 180° kann zum einen genutzt werden, um zum Fehlerausgleich ein Differenzsignal zu bilden. Im Zusammenhang mit der Erfindung ergibt sich zudem der Vorteil, dass durch einfache Addition zweier Abtastsignale im gegenseitigen Phasenversatz von 180° gerade der Verlauf der Modulation des Tastverhältnisses übrig bleibt, die sich so besonders einfach rekonstruieren lässt. Weiterhin ist es vorteilhaft, die inkrementellen Abtasteinrichtungen untereinander gleichartig mit einer gleichen Anzahl von Einzelabtasteinheiten im gleichen gegenseitigen Phasenversatz auszugestalten, aber dies ist nicht zwingend erforderlich.

Die inkrementellen Abtasteinrichtungen weisen zueinander bevorzugt einen Phasenversatz von 90° oder 120° auf. Der Phasenversatz bezieht sich nun nicht auf ein einzelnes Inkrement, sondern auf eine Ausdehnung oder Periode des Positionssegments. Im Falle eines Drehgebers entsprechen diese Phasenangaben somit einer Position am Umfang. Es wurde schon ausgeführt, dass für den Verlauf der Modulationsfunktion ähnliche Aspekte zu beachten sind wie für den Verlauf der Abtastsignale. Das gilt nun auch für die Anordnung und die Phasenbeziehungen der inkrementellen Abtasteinrichtungen im Vergleich zu den Einzelabtasteinheiten innerhalb der jeweiligen inkrementellen Abtasteinrichtung. Um aus dem Verlauf der Modulation des Tastverhältnisses die zweite Positionsinformation zu gewinnen, sollte der gegenseitigen Phasenversatz der inkrementellen Abtasteinrichtungen nicht ausgerechnet 0° oder 180° betragen, wohingegen 90° eine besonders günstige Konstellation ist und auch 120° besondere Vorteile verspricht.

Die Gebervorrichtung weist bevorzugt mindestens eine weitere inkrementelle Abtasteinrichtung in einem Phasenversatz von 180° zu einer anderen inkrementellen Abtasteinrichtung auf. Das bezieht sich weiterhin auf eine Ausdehnung oder Periode des Positionssegments. Die zusätzliche Messung bei 180° ermöglicht die Kompensation gewisser Fehler, insbesondere einer Exzentrizität, wofür vorzugsweise Differenzsignale gebildet werden. Besonders bevorzugt sind vier inkrementelle Abtasteinrichtungen als Paare bei 0°, 180° und bei 90°, 270° vorgesehen.

Die Steuer- und Auswertungseinheit ist bevorzugt dafür ausgebildet, eine inkrementelle erste Positionsinformation mehrfach aus den Abtastsignalen verschiedener Einzelabtasteinheiten zu bestimmen, insbesondere je einmal aus den Abtastsignalen der Einzelabtasteinheiten einer inkrementellen Abtasteinrichtung. Im Grundsatz ist mit der inkrementellen ersten Positionsinformation bereits ein Inkrementalsystem realisiert. Die Abtastsignale der zweiten inkrementellen Abtasteinrichtung sowie diejenigen etwaiger weiterer inkrementelle Abtasteinrichtungen ermöglichen aber für sich ebenfalls die Bestimmung einer inkrementellen Messinformation. Diese Redundanz, oder bei Unterschieden im Aufbau der inkrementellen Abtasteinrichtungen sogar diversitäre Redundanz, kann dafür genutzt werden, die inkrementellen Positionen miteinander zu verrechnen oder durch Vergleiche zu verifizieren, insbesondere im Sinne eines Sicherheitsniveaus. Das führt zu einer höheren Genauigkeit, Robustheit und Verlässlichkeit.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Drehgebers;
- Fig. 2: eine beispielhafte Anordnung von zwei Abtasteinrichtungen im Winkelversatz von 90° um den Umfang der Maßverkörperung eines Drehgebers;
- Fig. 3: eine schematische Darstellung zur Modulation des Tastverhältnisses bei einem Drehgeber;
- Fig. 4: eine schematische Darstellung zur Modulation des Tastverhältnisses bei einem Lineargeber;
- Fig. 5: ein beispielhaftes rechteckförmiges Signal mit einem Tastverhältnis von 50%;
- Fig. 6: ein beispielhaftes Sinussignal mit einem Tastverhältnis von 50%;
- Fig. 7: ein beispielhaftes rechteckförmiges Signal bei moduliertem Tastverhältnis;
- Fig. 8: ein beispielhaftes Sinussignal bei moduliertem Tastverhältnis;
- Fig. 9: die überlagerte Darstellung zweier bei 0° und bei 180° erfasster Signale bei moduliertem Tastverhältnis;
- Fig. 10: die überlagerte Darstellung zweier bei 90° und bei 270° erfasster Signale bei moduliertem Tastverhältnis;
- Fig. 11: eine Rekonstruktion der Modulation des Tastverhältnisses gemäß den Figuren 9 und 10 sowie einer entsprechenden Modulation der Signale einer weiteren Sensorgruppe;
- Fig. 12: eine aus den Verläufen der Modulation des Tastverhältnisses gemäß Figur 11 bestimmte Absolutposition; und
- Fig. 13: aus den Signalen gemäß Figuren 9 und 10 und entsprechenden Signalen einer weiteren Sensorgruppe gewonnene inkrementelle Positionssignale.

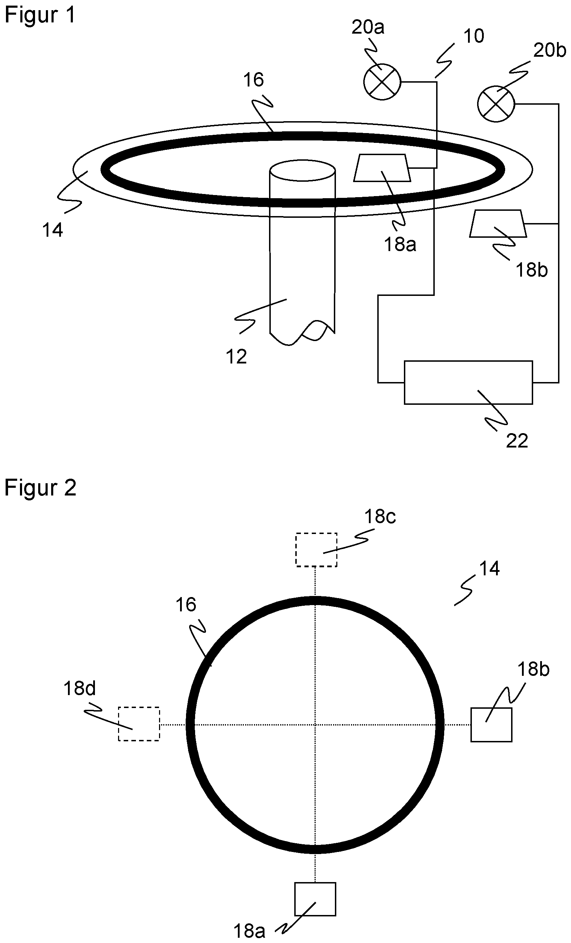

Figur 1 zeigt eine schematische Darstellung einer Gebervorrichtung 10 in einer Ausführungsform als Encoder oder Drehgeber. Die Gebervorrichtung 10 weist eine mit einer Welle 12 rotierende Codescheibe oder Maßverkörperung 14 auf, und auf der Maßverkörperung 14 befindet sich eine Codespur oder Maßspur 16 mit inkrementeller Codierung, d.h. sich mehrfach wiederholenden Abschnitten oder Perioden einer Winkelcodierung. Die Maßverkörperung 14 ist vorzugsweise kreisförmig und weist nur die eine Maßspur 16 auf.

Am Umfang der Maßverkörperung 14 beziehungsweise der Maßspur 16 sind mindestens zwei Abtasteinrichtungen 18a-b angeordnet. Jede dieser Abtasteinrichtungen 18a-b tastet mit mehreren hier nicht gezeigten Einzelabtasteinheiten oder speziell in dieser optischen Ausführungsform mit Fotodioden die Maßspur 16 im Verlauf der Drehbewegung ab. Die Einzelabtasteinheiten sind vorzugsweise auf einem Opto-ASIC (Application-Specific Integrated Circuit) integriert und empfangen das Licht eines den Abtasteinrichtungen 18a-b zugeordneten Lichtsenders 20a-b, das durch die Maßspur 16 dringt. Jede der Abtasteinrichtungen 18a-b erzeugt somit über ihre mehreren Einzelabtasteinheiten mehrere Abtastsignale, beispielsweise je ein Sinussignal und ein Cosinussignal. Das lässt sich beispielsweise durch lichtempfindliche Flächen gegeneinander versetzter Sinusgeometrien erreichen. Andere Ausführungsformen nutzen eine andere als sinusförmige Modulation, einen anderen Phasenversatz zwischen den Abtastsignalen als 90° und/oder eine andere Anzahl von Einzelabtasteinheiten, um beispielsweise drei Abtastsignale im Phasenversatz 0°, 120° und 240° oder durch Phasenversatz 0°, 90°, 180° und 270° Abtastsignale gemäß sin, cos, -sin und -cos und nach paarweiser Differenzbildung differentielle Sinus- und Cosinussignale zu erfassen.

Es soll an dieser Stelle betont werden, dass der Phasenversatz der Abtastsignale der Einzelabtasteinheiten innerhalb einer jeweiligen Abtasteinrichtung 18a-b nicht mit dem gegenseitigen Versatz der Anordnung der Abtasteinrichtungen 18a-b verwechselt werden darf. Der genannte Phasenversatz bezieht sich nur auf eine inkrementelle Periode der inkrementellen Maßspur 16, d.h. für diesen Phasenversatz sind 360° eine inkrementelle Periode. Der Versatz der Anordnung der Abtasteinrichtungen 18a-b dagegen betrifft den vollen Umfang der Maßverkörperung 14 beziehungsweise Maßspur 16, hier ist demnach eine Periode von 360° der gesamte Umfang oder eine volle Umdrehung. Später werden Positionssegmente vorgestellt, wobei sich nur vorzugsweise ein einziges Positionssegment über den gesamten Umfang erstreckt. Im Falle mehrere Positionssegmente wird der Versatz der Anordnung der Abtasteinrichtungen 18a-b in Phasen angegeben, für die 360° der Periode oder Ausdehnung eines Positionssegments entsprechen, wobei dann diese 360° beispielsweise nur der halbe Umfang sein können.

Eine Steuer- und Auswertungseinheit 22 bewertet die Abtastsignale einer jeden Abtasteinrichtung 18a-b, um eine inkrementelle Winkelposition der Maßverkörperung 14 zu bestimmen. Bei einem Sinus- und Cosinussignal kann dies mit Hilfe des Arkustangens berechnet werden. Die Art der Abtastsignale, somit Ausgestaltung von Maßspur 16 und Abtasteinrichtungen 18a-b, sowie deren konkrete Auswertung kann variiert werden, die Erfindung ist auf keine besondere Weise festgelegt, wie Abtastsignale erfasst werden und damit eine inkrementelle Winkelposition gemessen wird.

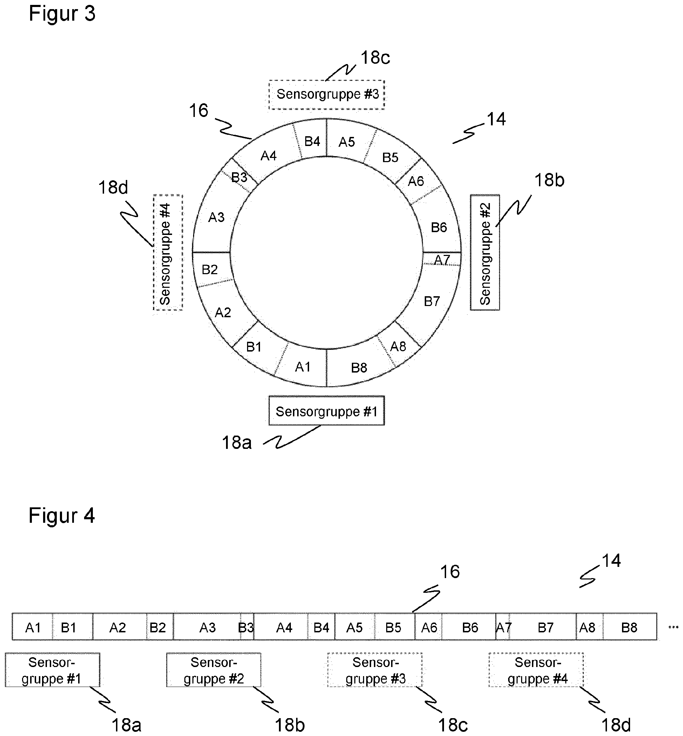

Kern der Erfindung ist vielmehr eine Modulation des Tastverhältnisses, die später unter Bezugnahme auf die Figuren 3 bis 12 näher erläutert wird. Eine inkrementelle Winkelposition ist nur innerhalb einer inkrementellen Periode eindeutig, sie wiederholt sich vielfach bei Drehung der Maßverkörperung 14 über den Umfang. Mit Hilfe der Modulation des Tastverhältnisses wird es aber möglich, eine absolute Winkelposition zu bestimmen oder alternativ ein zweites Inkrementalsystem mit einer anderen Periode oder Periodenlänge umzusetzen.

Die Winkelposition oder daraus ermittelte Größen, etwa eine Geschwindigkeitsinformation nach Differenzierung der Winkelposition, können an einem Ausgang bereitgestellt werden. Vorzugsweise erfolgt die Bewertung im Digitalen nach entsprechender Analog-Digital-Wandlung. Prinzipiell kann die Steuer- und Auswertungseinheit 22 auch zumindest teilweise in den Abtasteinrichtungen 18a-b oder auch extern vorgesehen sein, die Gebervorrichtung 10 gibt im letzteren Fall beispielsweise die Abtastsignale und/oder Zwischenergebnisse wie eine rekonstruierte Modulation des Tastverhältnisses oder inkrementelle Winkelpositionen zur weiteren Verarbeitung aus.

Die Darstellung der Gebervorrichtung 10 in Figur 1 ist sehr schematisch. Daher ist die Ausgestaltung der Abtasteinrichtungen 18a-b mit zugehörigen Lichtsendern 20a-b sehr einfach gehalten. Insbesondere in Bezug auf die Dimensionierungen und konkreten Positionen der Bauelemente kann die Gebervorrichtung 10 in der Praxis stark von Figur 1 abweichen. Alternativ zu einem transmissiven Aufbau ist auch ein reflexiver Aufbau denkbar, bei dem sich Abtasteinrichtungen 18a-b und Lichtsender 20a-b auf derselben Seite der Maßverkörperung 14 befinden und die Maßspur 16 reflektierende Eigenschaften hat. Auch die Ausführung als optoelektronische Gebervorrichtung 10 ist beispielhaft, alternativ kann erfindungsgemäß eine magnetische, induktive oder kapazitive Gebervorrichtung 10 vorgesehen sein oder ein sonstiges geeignetes physikalisches Wirkprinzip zur Erfassung von Abtastsignalen eingesetzt werden. Bei einem magnetischen System beispielsweise wechseln einander statt transparenter und nicht transparenter Bereiche der Maßspur 16 Nordpole und Südpole ab, die von Hall-Sensoren oder dergleichen der Abtasteinrichtungen 18a-b erfasst werden.

Die Gebervorrichtung 10 kann ferner statt als Drehgeber als Lineargeber oder Längsmesssystem ausgebildet sein. Die Maßverkörperung 14 ist dann nicht kreisförmig, sondern langgestreckt, die Maßspur entsprechend auf einer Gerade statt einem Kreis angeordnet, und die Abtasteinrichtungen 18a-b sind statt in Umfangsrichtung in Längsrichtung zueinander versetzt angeordnet.

Figur 2 illustriert nochmals in einer Draufsicht mögliche Anordnungen der Abtasteinrichtungen 18a-b in einer Draufsicht auf die Maßverkörperung 14 und die Maßspur 16. Mit durchgezogenen Linien sind zwei Abtasteinrichtungen 18a-b entsprechend der Figur 1 gezeigt. Mit gestrichelten Linien sind optionale zusätzliche Abtasteinrichtungen 18c-d dargestellt, in diesem Beispiel dann insgesamt vier Abtasteinrichtungen 18a-d. Die Winkelposition am Umfang der Maßverkörperung 14 ist prinzipiell beliebig, vorzugsweise beträgt jedoch der gegenseitige Winkelabstand 90°. Eine andere beispielhafte Konstellation verwendet drei Abtasteinrichtungen im gegenseitigen Versatz von 120°. Die Anzahl und die gegenseitigen Winkelabstände der Abtasteinrichtungen sind prinzipiell beliebig, lediglich eine Konfiguration mit genau zwei Abtasteinrichtungen im Winkelabstand 0° oder 180° sollte vermieden werden.

Figur 3 ist eine Darstellung ähnlich Figur 2 zur Illustration einer Modulation des Tastverhältnisses, wobei nun die Abtasteinrichtungen 18a-d als Sensorgruppe #1 bis Sensorgruppe #4 bezeichnet sind. Die Maßspur 16 weist hier zur besseren Erläuterung eine für die Praxis weniger geeignete Anzahl von lediglich acht Inkrementen oder Codeelementen und Lücken A1/B1-A8/B8 auf. Bei einer herkömmlichen Gebervorrichtung 10 wären die jeweiligen Codeelemente A1-A8 sowie und die zugehörigen Lücken B1-B8 untereinander gleich groß, das Tastverhältnis somit konstant. Üblicherweise würde zudem die Ausdehnung der Codeelemente mit derjenigen der Lücken übereinstimmen und somit das Tastverhältnis 50% betragen. Es sei nochmals angemerkt, dass ein Tastverhältnis genaugenommen eine Eigenschaft eines Signals ist, aber durch die Auslegung der Maßspur 16 wird das Tastverhältnis entsprechend beeinflusst.

Die Breiten der Codeelemente A1-A8 und invers dazu der Lücken B1-B8 variiert im Beispiel der Figur 3 gemäß einer Periode einer Sinusfunktion als Modulationsfunktion. Das ist eine besonders vorteilhafte Wahl der Modulationsfunktion, sind aber auch andere periodische und nicht periodische, stetige Modulationsfunktionen beziehungsweise die Erstreckung über mehr oder weniger als eine Periode denkbar.

Die Modulation des Tastverhältnisses erstreckt sich im Beispiel der Figur 3 über den gesamten Umfang. Es ist alternativ denkbar, mehrere Positionssegmente über den Umfang zu verteilen, beispielsweise vier Positionssegmente über jeweils 90° des Umfangs. Die Abtasteinrichtungen 18a-d rücken dann vorzugsweise um den entsprechenden Faktor, hier einen Faktor vier, enger zusammen. Sie würden dann aber immer noch im Phasenversatz von 0°, 90°, 180°, 270° zueinander angeordnet sein, wobei sich dieser Phasenversatz nun nur noch auf die 90° eines Viertelkreises eines Positionssegments beziehen und nicht mehr den vollen 360°-Umfang der Maßverkörperung 14. Das gilt entsprechend für andere Anzahlen von Positionssegmenten, die im Übrigen vorzugsweise gleich groß sind.

Figur 4 zeigt eine nun langgestreckte Maßverkörperung 14 und Maßspur 16 für ein Längenmesssystem statt für einen Drehgeber als Gebervorrichtung 10. Die Erfassung von Abtastsignalen durch Einzelabtasteinheiten mindestens zweier Abtasteinrichtungen 18a-b, deren Anordnung und Aufbau sowie die Bestimmung einer inkrementellen Position ist hier ebenso analog wie die Aufprägung einer Modulation des Tastverhältnisses durch unterschiedliche Breiten der Codeelemente A1-A8 und der Lücken B1-B8. Zwischen einem rotatorischen System und einem translatorischen oder linearen System wird deshalb im Folgenden meist nicht mehr unterschieden. Winkelangaben wie 90° beziehen sich nun natürlich nicht mehr auf einen physischen Umfang, sondern eine jeweilige Periode eines Inkrements oder eines Positionssegments. Es ist möglich, mehrere Positionssegmente aneinanderzureihen, auch das ist analog zu einem Drehgeber, wobei sich bei einem linearen System entweder der Messbereich verlängert oder mehrere Positionssegmente auf einen gegebenen Messbereich verteilt werden.

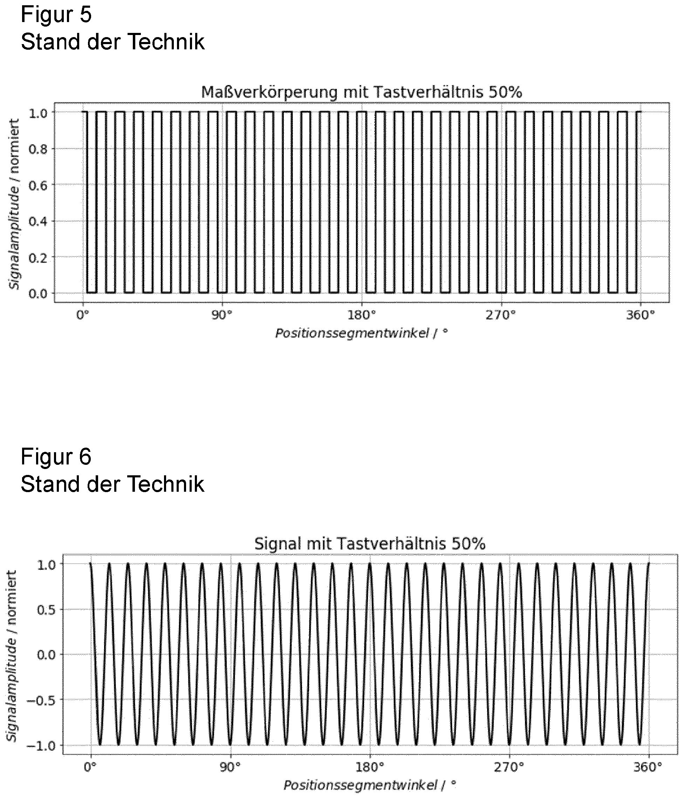

Figur 5 illustriert nochmals das feste Tastverhältnis von 50% einer herkömmlichen Maßverkörperung. Dabei sind, anders als in Figur 3 und Figur 4, die Striche und Lücken der Maßspur 16 von konstanter und untereinander gleicher Breite. Dementsprechend wechseln Codeelemente und Lücken einander ganz gleichmäßig ab. Figur 5 zeigt je nach Interpretation das bei der Abtastung entstehende gleichmäßige Rechtecksignal oder das abwechselnde Verhalten auf der Maßverkörperung selbst, wo einander auf der Maßspur Bereiche vollständiger Transmissivität und Undurchlässigkeit oder alternativ in einem reflexiven Aufbau von vollständiger Reflexivität und Absorption abwechseln, mit geeigneten Entsprechungen für ein anderes physikalisches Sensorprinzip.

Figur 6 zeigt ein sinusförmiges Abtastsignal mit dem festen Tastverhältnis von 50%. Ursprünglich ist ein Tastverhältnis für ein digitales Rechtecksignal definiert, ähnlich wie in Figur 5 gezeigt, und beschreibt das Verhältnis zwischen den beiden Zuständen "high" und "low". Das lässt sich jedoch auf andere Signalformen übertragen, wo es dann das Verhältnis jeweiliger Integrale des Signalverlaufs oberhalb und unterhalb eines Mittelwerts von minimaler und maximaler Signalamplitude angibt. Das Tastverhältnis kann dabei von 0% bis 100% variieren. Das Tastverhältnis wird so eine Eigenschaft eines beliebigen Abtastsignals und indirekt auch einer Maßspur 16, die bei entsprechender Abtastung ein Signal mit diesem Tastverhältnis erzeugt. Dementsprechend schwankt ein Sinussignal mit festem Tastverhältnis 50% wie in Figur 6 gleichmäßig um die Nulllinie. Die Maßverkörperung 14 beziehungsweise deren Maßspur 16 erzeugt in Abhängigkeit von einer Positionsänderung nicht zwingend ein sinusförmiges Signal, sondern je nach Wirkprinzip, Maßverkörperung 14 und Aufbau der Abtasteinrichtung 18a-b Signale mit der Form eines Rechtecks, Dreiecks, Sägezahns oder einer sonstigen Funktion, die wegen der sich wiederholenden Inkremente periodisch ist. Unabhängig von einem konkreten Verlauf lässt sich jeweils ein Tastverhältnis definieren. Bevorzugt ist ein sinusförmiger Verlauf, und daher wird die Beschreibung mit diesem Beispiel fortgesetzt.

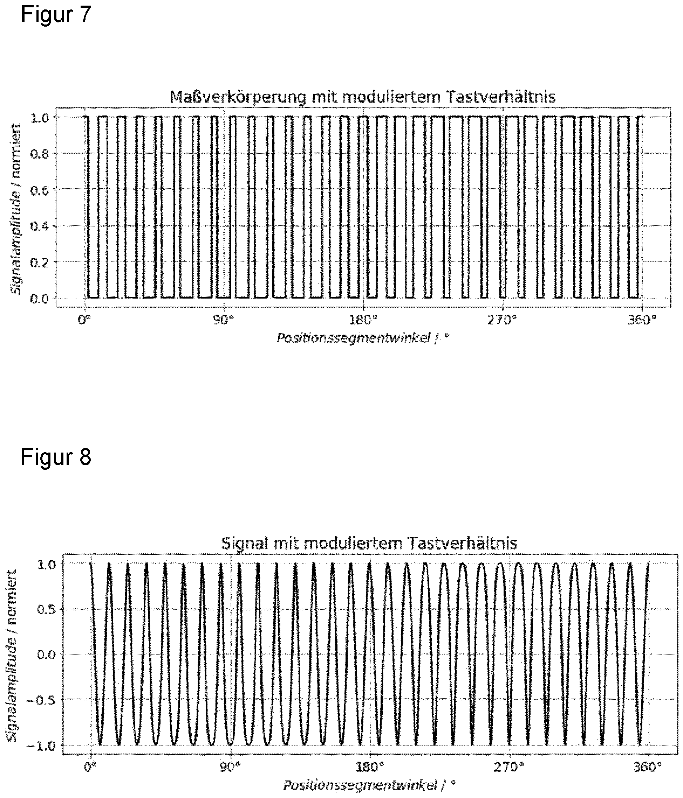

Figur 7 illustriert ein moduliertes Tastverhältnis. Anders als in Figur 5 ist erfindungsgemäß das Tastverhältnis nicht länger konstant, sondern variiert kontinuierlich gemäß einer Modulationsfunktion über ein Positionssegment hinweg. Eine besonders geeignete Modulationsfunktion ist eine Sinusfunktion. Es sei daran erinnert, dass ein Positionssegment den gesamten Längenmessbereich beziehungsweise Umfang der Gebervorrichtung 10 abdecken oder es mehrere Positionssegmente geben kann, in denen dann jeweils das Tastverhältnis moduliert ist.

Es sind unterschiedliche Maßnahmen denkbar, mit denen das Tastverhältnis variiert wird. Wie zu den Figuren 3 und 4 erläutert, kann dazu insbesondere die Maßverkörperung 14 beziehungsweise deren Maßspur 16 verändert werden. In einem optischen System wird die beispielsweise Breite von transparenten und nichttransparenten Bereichen beziehungsweise von reflektierenden und nicht reflektierenden Bereichen variiert, bei magnetischen Systemen entsprechend die Breite von aufeinanderfolgenden Nord- und Südpolen, und ähnlich für kapazitive und induktive Systeme, also für Dielektrika und Spulenanordnungen. Figur 7 illustriert in einer Interpretation diese unterschiedlichen Breiten, in einer anderen Interpretation ein durch Abtastung gewonnenes Rechtecksignal mit nun schwankender Breite der Rechteckperioden.

In den Figuren 3 und 4 sind der Übersicht halber lediglich acht inkrementelle Perioden dargestellt. In den weiteren Figuren 7 bis 13 ist eine etwas realistischere Anzahl von 30 inkrementellen Perioden gewählt, wobei die Erfindung auf keine bestimmte Anzahl von inkrementellen Perioden beschränkt ist. Die kontinuierliche Modulationsfunktion wird über die Anzahl der Perioden diskretisiert.

Figur 8 zeigt ein sinusförmiges Abtastsignal, wobei nun im Gegensatz zu Figur 6 das Tastverhältnis nicht mehr konstant ist, sondern wie in Figur 7 entsprechend einer hier beispielhaft als Sinusfunktion gewählten Modulationsfunktion variiert wird. Vorsichtshalber sei auf eine doppelte Verwendung einer Sinusfunktion hingewiesen: Einerseits erzeugen die Einzelabtasteinheiten der Abtasteinrichtungen 18a-b sinusförmige Abtastsignale, das ergibt in Figur 8 die Grundform einer Sinusfunktion, andererseits ist die Modulationsfunktion sinusförmig, was sich in den modulierten Breiten der Sinusschwindungen des Abtastsignals niederschlägt. Sinusförmige Abtastsignale und eine sinusförmige Modulationsfunktion für das Tastverhältnis sind vorteilhaft, beide Verläufe können jedoch abweichend gewählt werden, und zwar unabhängig voneinander, also beispielsweise die Kombination sägezahnartiger Abtastsignale mit einer sigmoiden Modulation des Tastverhältnisses.

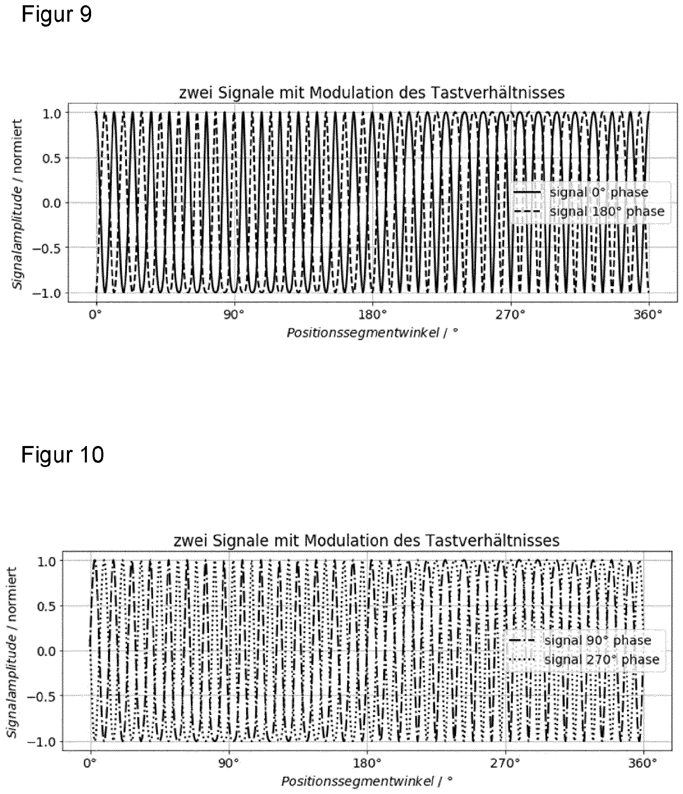

Die Figuren 9 und 10 zeigen sinusförmige Abtastsignale einer besonders bevorzugten Ausführungsform einer Abtasteinrichtung 18a-b mit vier Einzelabtasteinheiten im gegenseitigen Phasenversatz von 90°, wobei sich dieser Phasenversatz auf ein einzelnes Inkrement bezieht. Allgemein genügen zwei Einzelabtasteinheiten in beliebigem Phasenversatz ungleich 0° und 180° zueinander. Mit den hier verwendeten vier Einzelabtasteinheiten können jedoch die vier Signale Sin, Cos, -Sin und -Cos erfasst werden, was zu einer besonders günstigen Auslegung führt. Über die jeweiligen komplementären Abtastsignale in einem Phasenversatz von 180° können Differenzsignale gebildet und so Fehler kompensiert werden.

Die Figur 9 zeigt mit durchgezogener Linie das Abtastsignal einer ersten Einzelabtasteinheit, deren Position mit Phase 0° bezeichnet wird. Soweit entspricht das der Darstellung der Figur 8.zusätzlich ist mit gestrichelte Linie das Abtastsignalen einer zweiten Einzelabtasteinheit mit Phase 180° eingezeichnet. Durch Differenzbildung würde sich ein offsetfreies gemeinsames Signal doppelter Amplitude ergeben. Figur 10 zeigt entsprechende mit unterschiedlicher Strichlierung zwei Abtastsignale einer dritten Einzelabtasteinheit und einer vierten Einzelabtasteinheit mit Phase 90° beziehungsweise mit Phase 270°. Durch Differenzbildung würde sich wiederum ein offsetfreies gemeinsames Signal doppelter Amplitude ergeben, und zwar im Phasenversatz 90° zu demjenigen aus Figur 9. Diese beiden Signale können demnach einer robusten inkrementellen Positionsbestimmung etwa über eine Arkustangensberechnung zugrunde gelegt werden, wie an sich von Sin/Cos-Gebern bekannt.

Der Verlauf der Modulation des Tastverhältnisses ist mit dem Auge bereits als heller Streifen ähnlich einer Schwebung zu erkennen. Die Rekonstruktion ist damit auch algorithmisch möglich. Bei der vorteilhaften Auslegung wie zu den Figuren 9 und 10 beschrieben ist die Rekonstruktion besonders einfach möglich, indem punktweise alle Abtastsignale oder paarweise die Signale im gegenseitigen Phasenversatz 180° aufaddiert werden. Dann eliminieren sich nämlich die eigentlichen Schwingungen, bei einem konstanten Tastverhältnis würde überall Null resultieren, und dementsprechend wird bei einem modulierten Tastverhältnis gerade die Modulation rekonstruiert. Nochmals anders ausgedrückt beschreibt ein so ermittelte Tastverhältnis den Offset der Summe der Abtastsignale gegenüber Null, wobei Null vorzugsweise einem Tastverhältnis von 50% entspricht.

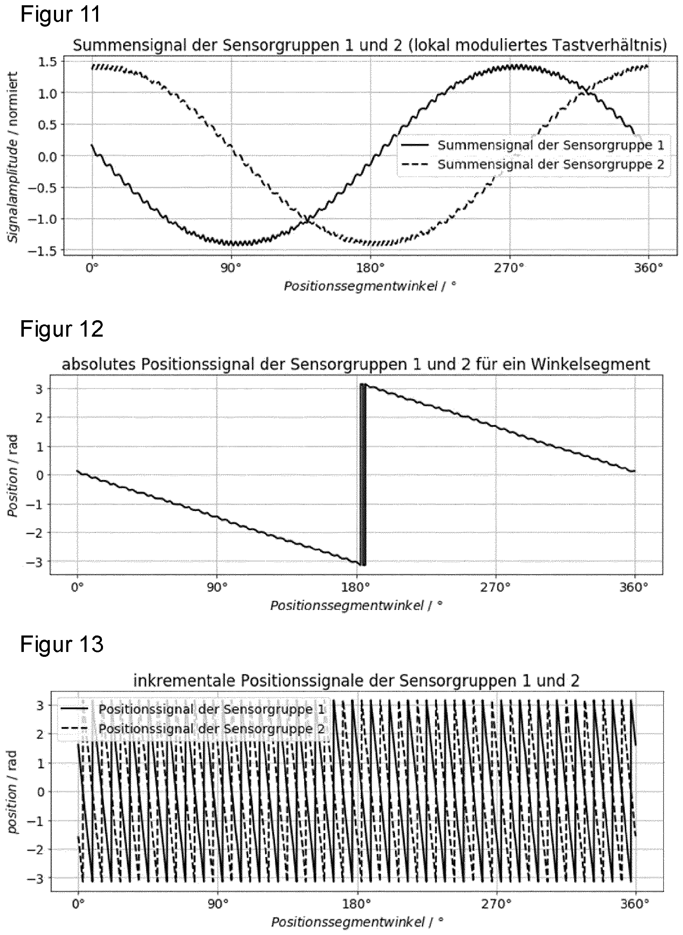

Figur 11 zeigt das Ergebnis dieser Rekonstruktion der Modulation, hier vorteilhaft durch eine Aufsummierung der Abtastsignale aller Einzelabtasteinheiten einer jeweiligen Abtasteinrichtung 18a-b. Es können optional weitere Verfahren zur Steigerung der Genauigkeit zum Einsatz kommen, etwa eine Gewichtung der Abtastsignale, in die eine Abhängigkeit von den Phasenlagen einfließen kann. Jedenfalls liefert jede Abtasteinrichtung 18a-b für sich einen Verlauf der Modulation. Mit durchgezogener Linie ist das Summensignal der einen Abtasteinrichtung 18a oder Sensorgruppe #1 gezeigt, das aus den Abtastsignalen gemäß Figur 9 und 10 entsteht. Ganz analog wird das mit gestrichelter Linie gezeigte Summensignal einer weiteren Abtasteinrichtung 18b oder Sensorgruppe #2 aus deren Abtastsignalen erzeugt, und es hat einen Phasenversatz entsprechend der gegenseitigen Anordnung der beiden Abtasteinrichtungen 18a-b. Dieser Phasenversatz bezieht sich jetzt nicht mehr auf ein einzelnes Inkrement, sondern die längere Periode entsprechend der Ausdehnung eines Positionssegments, insbesondere den gesamten Umfang der Maßverkörperung 14 im Falle eines Drehgebers und nur eines einzigen Positionssegments. Wie nun mehrfach erwähnt, muss die Modulation anders als in Figur 11 nicht sinusförmig verlaufen, sondern die Variation des Tastverhältnisses kann durch eine andere, vorzugsweise stetige Modulationsfunktion vorgegeben werden. Dabei kann ein Positionssegment eine vollständige oder unvollständige Periode der Modulationsfunktion umfassen.

Figur 12 zeigt ein absolutes Positionssignal, das aus den beiden Verläufen der Modulation gemäß Figur 11 gewonnen wird. Das Positionssignal ist nur eindeutig bezogen auf ein Positionssegment, wenn also mehrere Positionssegmente vorgesehen sind, handelt es sich um ein inkrementelles Positionssignal in den im Vergleich zu den ursprünglichen Inkrementen größeren Perioden des Positionssegments. Die Bestimmung der in Figur 12 gezeigten Position aus zwei zueinander phasenversetzen Signalen wie in Figur 11 kann analog zu den Auswertungen eines Sin/Cos-Gebers erfolgen.

Figur 13 zeigt ergänzend die inkrementellen Positionssignale aus den ursprünglichen Inkrementen der Maßspur 16. Wie bereits zu Figur 9 erläutert, kann ein solches inkrementelles Positionssignal aus mindestens zwei zueinander phasenversetzten Abtastsignalen von Einzelabtasteinheiten einer Abtasteinrichtung 18a-b bestimmt werden. Das ist deshalb möglich, weil die Periode der Inkremente gleich bleibt und nur das Tastverhältnis variiert wird.

Allerdings kann das modulierte Tastverhältnis lokal doch Positionsabweichungen verursachen. Deshalb ist es vorteilhaft, die inkrementelle Position mehrfach für jede Abtasteinrichtung 18a-b zu bestimmen, wie in Figur 13 mit durchgezogener Linie für die erste Abtasteinrichtung 18a oder Sensorgruppe #1 und mit gestrichelte Linie für die zweite Abtasteinrichtung 18b oder Sensorgruppe #2 gezeigt. Die beiden inkrementellen Positionssignale sind im Prinzip redundant, so dass die Genauigkeit und Verlässlichkeit durch gemeinsame Verrechnung oder Vergleiche noch gesteigert werden kann. Damit werden nicht nur etwaige lokale Auswirkungen des modulierten Tastverhältnisses, sondern auch sonstige Fehler reduziert.

Dementsprechend kann es sinnvoll sein, mindestens eine zusätzliche Abtasteinrichtung 18c-d hinzuzufügen, wie in Figur 3 schon für eine vorteilhafte Anordnung von vier Abtasteinrichtungen bei 0°, 90°, 180°, 270° gezeigt. Damit ergibt sich die Möglichkeit der Erfassung zusätzlicher inkrementeller Positionssignale und damit einer noch höheren Genauigkeit und Verlässlichkeit. Außerdem kann so auch die Modulation des Tastverhältnisses noch genauer rekonstruiert und damit auch die Messgenauigkeit für die eindeutige Position innerhalb eines Positionssegments gesteigert werden.

Die Erfindung kommt bevorzugt mit nur einer einzigen Maßspur 16 aus. Das schließt aber die Existenz weitere Maßspuren für andere Codierungen und Positionsbestimmungsverfahren nicht aus, solche zusätzlichen Maßspuren können mit der Erfindung koexistieren und werden von ihr lediglich nicht benötigt. Weiterhin ist denkbar, mehrere Maßspuren 16 mit modulierten Tastverhältnis vorzusehen und so mehrere erfindungsgemäße Positionsbestimmungen nebeneinander zu implementieren.

Durch die Modulation des Tastverhältnisses und deren Rekonstruktion nach Abtastung an mehreren unterschiedlichen Stellen der Maßverkörperung 14 und der Maßspur 16 kann mit einfachen Mitteln eine zusätzliche Positionsinformation gewonnen werden. Sofern die Gebervorrichtung 10 nur ein Positionssegment über ihren gesamten Positionsmessbereich aufweist, insbesondere den 360°-Umfang eines Drehgebers, kann mit dieser zusätzlichen Positionsinformation ein Absolutmesssystem realisiert werden. Eine Gebervorrichtung 10 mit mehreren Positionssegmenten, die dann vorzugsweise untereinander gleichartig oder wenigstens mit einer gleichen Periode oder Ausdehnung ausgestaltet sind, kann zwei unterschiedlich aufgelöste Inkrementalsysteme miteinander kombinieren. Das gelingt jeweils aus einzigen Maßverkörperung 14 und vorzugsweise einer einzigen inkrementellen Maßspur 16.

## Patentansprüche

1. Gebervorrichtung (10) zur Bestimmung der Position eines ersten Objekts relativ zu einem zweiten Objekt, die eine mit dem ersten Objekt verbundene Maßverkörperung (14) mit mindestens einem Positionssegment mit einer Vielzahl von inkrementellen Codeelementen, eine mit dem zweiten Objekt verbundene erste inkrementelle Abtasteinrichtung (18a) mit mindestens zwei Einzelabtasteinheiten in gegenseitigem Phasenversatz zur Erzeugung eines jeweiligen Abtastsignals durch Abtastung der Maßverkörperung (14), wobei das Tastverhältnis der Abtastsignale gemäß einer Modulationsfunktion über das Positionssegment moduliert ist, sowie eine Steuer- und Auswertungseinheit (22) aufweist, die dafür ausgebildet ist, eine inkrementelle erste Positionsinformation aus den Abtastsignalen der beiden Einzelabtasteinheiten und eine zweite Positionsinformation aus der Modulation des Tastverhältnisses der Abtastsignale zu erzeugen,
**dadurch gekennzeichnet,**
**dass** die Gebervorrichtung (10) eine zweite inkrementelle Abtasteinrichtung (18b) mit mindestens zwei Einzelabtasteinheiten in gegenseitigem Phasenversatz zur Erzeugung eines jeweiligen Abtastsignals durch Abtastung der Maßverkörperung (14) aufweist, die mit einem Phasenversatz zu der ersten inkrementellen Abtasteinrichtung (18a) angeordnet ist, und dass die Steuer- und Auswertungseinheit (22) dafür ausgebildet ist, die zweite Positionsinformation aus der Modulation des Tastverhältnisses der Abtastsignale der ersten inkrementellen Abtasteinrichtung (18a) und der Modulation des Tastverhältnisses der Abtastsignale der zweiten inkrementellen Abtasteinrichtung (18b) zu erzeugen.

2. Gebervorrichtung (10) nach Anspruch 1,
wobei die Maßverkörperung (14) nur ein Positionssegment aufweist, das sich über den Positionsmessbereich der Gebervorrichtung (10) erstreckt, und wobei die zweite Positionsinformation eine absolute Positionsinformation ist.

3. Gebervorrichtung (10) nach Anspruch 1,
wobei die Maßverkörperung (14) mehrere Positionssegmente aufweist, insbesondere untereinander gleichartige Positionssegmente, und wobei die zweite Positionsinformation eine inkrementelle Positionsinformation mit einer zu der inkrementellen ersten Positionsinformation unterschiedlichen Periode ist.

4. Gebervorrichtung (10) nach einem der vorhergehenden Ansprüche,
wobei die Steuer- und Auswertungseinheit (22) dafür ausgebildet ist, aus den Abtastsignalen einer inkrementellen Abtasteinrichtung (18a-d) das Tastverhältnis zu rekonstruieren, insbesondere durch Addition der Abtastsignale der Einzelabtasteinheiten einer Abtasteinrichtung (18a-d).

5. Gebervorrichtung (10) nach einem der vorhergehenden Ansprüche,
wobei die Modulationsfunktion eine zumindest annähernd kontinuierliche Funktion ist, insbesondere eine periodische Funktion.

6. Gebervorrichtung (10) nach einem der vorhergehenden Ansprüche,
wobei die Abtasteinrichtungen (18a-d) dieselbe einzige Codespur (16) aus inkrementellen Codeelementen der Maßverkörperung (14) erfassen.

7. Gebervorrichtung (10) nach einem der vorhergehenden Ansprüche,
wobei die Codeelemente in einem gleichmäßigen Abstand zueinander angeordnet sind.

8. Gebervorrichtung (10) nach einem der vorhergehenden Ansprüche,
wobei die Codeelemente und Lücken zwischen den Codeelementen in ihrer Breite entsprechend der Modulationsfunktion variieren.

9. Gebervorrichtung (10) nach einem der vorhergehenden Ansprüche,
wobei die Codeelemente dafür ausgebildet sind, ein periodisches Abtastsignal zu erzeugen, insbesondere ein sinusförmiges Abtastsignal

10. Gebervorrichtung (10) nach einem der vorhergehenden Ansprüche,
wobei die Einzelabtasteinheiten mindestens einer inkrementellen Abtasteinrichtung (18a-d) zueinander einen Phasenversatz von 90° oder 120° eines durch den Abstand der Codeelemente gegebenen Inkrements aufweisen.

11. Gebervorrichtung (10) nach einem der vorhergehenden Ansprüche,
wobei mindestens eine inkrementelle Abtasteinrichtung (18a-d) eine weitere Einzelabtasteinheit in einem Phasenversatz von 180° zu einer anderen Einzelabtasteinheit aufweist, insbesondere zur Bildung eines Differenzsignals..

12. Gebervorrichtung (10) nach einem der vorhergehenden Ansprüche,
wobei die inkrementellen Abtasteinrichtungen (18a-d) zueinander einen Phasenversatz von 90° oder 120° aufweisen, bezogen auf eine Ausdehnung oder Periode des Positionssegments.

13. Gebervorrichtung (10) nach einem der vorhergehenden Ansprüche,
die mindestens eine weitere inkrementelle Abtasteinrichtung (18c-d) in einem Phasenversatz von 180° zu einer anderen inkrementellen Abtasteinrichtung (18a-d) aufweist.

14. Gebervorrichtung (10) nach einem der vorhergehenden Ansprüche,
wobei die Steuer- und Auswertungseinheit (22) dafür ausgebildet ist, eine inkrementelle erste Positionsinformation mehrfach aus den Abtastsignalen verschiedener Einzelabtasteinheiten zu bestimmen, insbesondere je einmal aus den Abtastsignalen der Einzelabtasteinheiten einer inkrementellen Abtasteinrichtung (18a-d).

15. Verfahren zur Bestimmung der Position eines ersten Objekts relativ zu einem zweiten Objekt, bei dem eine mit dem ersten Objekt verbundene Maßverkörperung (14) mit mindestens einem Positionssegment mit einer Vielzahl von inkrementellen Codeelementen von einer mit dem zweiten Objekt verbundenen ersten inkrementelle Abtasteinrichtung (18a) mit mindestens zwei Einzelabtasteinheiten in gegenseitigem Phasenversatz zur Erzeugung eines jeweiligen Abtastsignals abgetastet wird, wobei das Tastverhältnis der Abtastsignale gemäß einer Modulationsfunktion über das Positionssegment moduliert, und wobei eine inkrementelle erste Positionsinformation aus den Abtastsignalen der beiden Einzelabtasteinheiten und eine zweite Positionsinformation aus der Modulation des Tastverhältnisses der Abtastsignale erzeugt werden,
**dadurch gekennzeichnet,**
**dass** eine zweite inkrementelle Abtasteinrichtung (18b) in einem Phasenversatz zu der ersten inkrementellen Abtasteinrichtung (18a) mit mindestens zwei Einzelabtasteinheiten in gegenseitigem Phasenversatz durch Abtastung der Maßverkörperung (14) ein jeweiliges Abtastsignal erzeugt und dass die zweite Positionsinformation aus der Modulation des Tastverhältnisses der Abtastsignale der ersten inkrementellen Abtasteinrichtung (18a) und der Modulation des Tastverhältnisses der Abtastsignale der zweiten inkrementellen Abtasteinrichtung (18b) erzeugt werden.

## Claims

1. An encoder apparatus (10) for determining the position of a first object relative to a second object, comprising a measuring standard (14) connected to the first object and having at least one position segment with a plurality of incremental code elements, a first incremental scanning device (18a) connected to the second object and having at least two individual scanning units in mutual phase offset for generating a respective scanning signal by scanning the measuring standard (14), the duty cycle of the scanning signals being modulated in accordance with a modulation function over the position segment, and a control and evaluation unit (22) configured to generate incremental first position information from the scanning signals of the two individual scanning units and second position information from the modulation of the duty cycle of the scanning signals, **characterized in that** the encoder apparatus (10) comprises a second incremental scanning device (18b) having at least two individual scanning units in mutual phase offset for generating a respective scanning signal by scanning the measuring standard (14), which is arranged with a phase offset with respect to the first incremental scanning device (18a), and **in that** the control and evaluation unit (22) is configured to generate the second position information from the modulation of the duty cycle of the scanning signals of the first incremental scanning device (18a) and the modulation of the duty cycle of the scanning signals of the second incremental scanning device (18b).

2. The encoder apparatus (10) according to claim 1,
wherein the measuring standard (14) comprises only one position segment extending over the position measuring range of the encoder apparatus (10), and wherein the second position information is absolute position information.

3. The encoder apparatus (10) according to claim 1,
wherein the measuring standard (14) has a plurality of position segments, in particular position segments which are identical to one another, and wherein the second position information is incremental position information having a period which is different from the incremental first position information.

4. The encoder apparatus (10) according to any of the preceding claims, wherein the control and evaluation unit (22) is configured to reconstruct the duty cycle from the scanning signals of an incremental scanning device (18a-d), in particular by adding up the scanning signals of the individual scanning units of a scanning device (18a-d).

5. The encoder apparatus (10) according to any of the preceding claims, wherein the modulation function is an at least approximately continuous function, in particular a periodic function.

6. The encoder apparatus (10) according to any of the preceding claims, wherein the scanning devices (18a-d) scan the same single code track (16) of incremental code elements of the measuring standard (14).

7. The encoder apparatus (10) according to any of the preceding claims, wherein the code elements are arranged at a uniform distance from each other.

8. The encoder apparatus (10) according to any of the preceding claims, wherein the code elements and gaps between the code elements vary in width according to the modulation function.

9. The encoder apparatus (10) according to any of the preceding claims, wherein the code elements are configured to generate a periodic scanning signal, in particular a sinusoidal scanning signal

10. The encoder apparatus (10) according to any of the preceding claims, wherein the individual scanning units of at least one incremental scanning device (18a-d) have a phase offset of 90° or 120° from one another of an increment given by the spacing of the code elements.

11. The encoder apparatus (10) according to any of the preceding claims, wherein at least one incremental scanning device (18a-d) comprises a further individual scanning unit in a phase offset of 180° to another individual scanning unit, in particular for forming a differential signal.

12. The encoder apparatus (10) according to any of the preceding claims,
wherein the incremental scanning devices (18a-d) have a phase offset of 90° or 120° from each other with respect to an extent or period of the position segment.

13. The encoder apparatus (10) according to any of the preceding claims, comprising at least one further incremental scanning device (18c-d) at a phase offset of 180° from another incremental scanning device (18a-d).

14. The encoder apparatus (10) according to any of the preceding claims,
wherein the control and evaluation unit (22) is configured to determine incremental first position information a plurality of times from the scanning signals of different individual scanning units, in particular once each from the scanning signals of the individual scanning units of an incremental scanning device (18a-d).

15. A method of determining the position of a first object relative to a second object, wherein a measuring standard (14) connected to the first object and having at least one position segment with a plurality of incremental code elements is scanned by a first incremental scanning device (18a) connected to the second object and having at least two individual scanning units in mutual phase offset for generating a respective scanning signal, wherein the duty cycle of the scanning signals is modulated in accordance with a modulation function over the position segment, and wherein incremental first position information is generated from the scanning signals of the two individual scanning units and second position information is generated from the modulation of the duty cycle of the scanning signals,
**characterized in that** a second incremental scanning device (18b) in a phase offset to the first incremental scanning device (18a) and having at least two individual scanning units in mutual phase offset generates respective scanning signals by scanning the measuring standard (14), and **in that** the second position information is generated from the modulation of the duty cycle of the scanning signals of the first incremental scanning device (18a) and the modulation of the duty cycle of the scanning signals of the second incremental scanning device (18b).

## Revendications

1. Appareil de codage (10) pour déterminer la position d'un premier objet par rapport à un deuxième objet, comprenant un étalon de mesure (14) connecté au premier objet et ayant au moins un segment de position avec une pluralité d'éléments de code incrémentiels, un premier dispositif de balayage incrémentiel (18a) connecté au deuxième objet et ayant au moins deux unités de balayage individuelles en décalage de phase mutuel pour générer un signal de balayage respectif en balayant l'étalon de mesure (14), le rapport cyclique des signaux de balayage étant modulé selon une fonction de modulation sur le segment de position, ainsi qu'une unité de commande et d'évaluation (22), configurée pour générer une première information de position incrémentale à partir des signaux de balayage des deux unités de balayage individuelles et une deuxième information de position à partir de la modulation du rapport cyclique des signaux de balayage,
**caractérisé en ce que** l'appareil de codage (10) comprend un deuxième dispositif de balayage incrémental (18b) ayant au moins deux unités de balayage individuelles en décalage de phase mutuel pour générer un signal de balayage respectif en balayant l'étalon de mesure (14), qui est disposé avec un décalage de phase par rapport au premier dispositif de balayage incrémental (18a), et **en ce que** l'unité de commande et d'évaluation (22) est configurée pour générer la deuxième information de position à partir de la modulation du rapport cyclique des signaux de balayage du premier dispositif de balayage incrémental (18a) et de la modulation du rapport cyclique des signaux de balayage du deuxième dispositif de balayage incrémental (18b).

2. Appareil de codage (10) selon la revendication 1,
dans lequel l'étalon de mesure (14) ne comprend qu'un seul segment de position s'étendant sur la plage de mesure de position de l'appareil de codage (10), et dans lequel la deuxième information de position est une information de position absolue.

3. Appareil de codage (10) selon la revendication 1,
dans lequel l'étalon de mesure (14) a une pluralité de segments de position, en particulier des segments de position qui sont identiques les uns aux autres, et dans lequel la deuxième information de position est une information de position incrémentielle ayant une période qui est différente de la première information de position incrémentielle.

4. Appareil de codage (10) selon l'une des revendications précédentes,
dans lequel l'unité de commande et d'évaluation (22) est configurée pour reconstituer le rapport cyclique à partir des signaux de balayage d'un dispositif de balayage incrémental (18a- d), en particulier en additionnant les signaux de balayage des unités de balayage individuelles d'un dispositif de balayage (18a- d).

5. Appareil de codage (10) selon l'une des revendications précédentes,
dans lequel la fonction de modulation est une fonction au moins approximativement continue, en particulier une fonction périodique.

6. Appareil de codage (10) selon l'une des revendications précédentes,
dans lequel les dispositifs de balayage (18a- d) balaient la même piste de code unique (16) d'éléments de code incrémentiels de l'étalon de mesure (14).

7. Appareil de codage (10) selon l'une des revendications précédentes,
dans lequel les éléments de code sont disposés à une distance uniforme les uns des autres.

8. Appareil de codage (10) selon l'une des revendications précédentes,
dans lequel les éléments de code et les espaces entre les éléments de code varient en largeur selon la fonction de modulation.

9. Appareil de codage (10) selon l'une des revendications précédentes,
dans lequel les éléments de code sont configurés pour générer un signal de balayage périodique, en particulier un signal de balayage sinusoïdal.

10. Appareil de codage (10) selon l'une des revendications précédentes,
dans lequel les unités de balayage individuelles d'au moins un dispositif de balayage incrémental (18a- d) ont un décalage de phase de 90° ou 120° les unes par rapport aux autres d'un incrément donné par l'espacement des éléments de code.

11. Appareil de codage (10) selon l'une des revendications précédentes,
dans lequel au moins un dispositif de balayage incrémental (18a- d) comprend une autre unité de balayage individuelle en décalage de phase de 180° par rapport à une autre unité de balayage individuelle, en particulier pour former un signal différentiel.

12. Appareil de codage (10) selon l'une des revendications précédentes,
dans lequel les dispositifs de balayage incrémentiels (18a- d) ont un décalage de phase de 90° ou 120° les uns par rapport aux autres, par rapport à une extension ou une période du segment de position.

13. Appareil de codage (10) selon l'une des revendications précédentes, comprenant au moins un autre dispositif de balayage incrémental (18c- d) à un décalage de phase de 180° par rapport à un autre dispositif de balayage incrémental (18a- d).

14. Appareil de codage (10) selon l'une des revendications précédentes,
dans lequel l'unité de commande et d'évaluation (22) est configurée pour déterminer une information incrémentale de première position plusieurs fois à partir des signaux de balayage de différentes unités de balayage individuelles, en particulier une fois chacune à partir des signaux de balayage des unités de balayage individuelles d'un dispositif de balayage incrémental (18a- d).

15. Procédé pour déterminer la position d'un premier objet par rapport à un deuxième objet, dans lequel un étalon de mesure (14) connecté au premier objet et présentant au moins un segment de position avec une pluralité d'éléments de code incrémentiels est balayé par un premier dispositif de balayage incrémentiel (18a) connecté au deuxième objet et présentant au moins deux unités de balayage individuelles en décalage de phase mutuel pour générer un signal de balayage respectif, le rapport cyclique des signaux de balayage étant modulé selon une fonction de modulation sur le segment de position, et dans lequel une première information de position incrémentale est générée à partir des signaux de balayage des deux unités de balayage individuelles et une deuxième information de position est générée à partir de la modulation du rapport cyclique des signaux de balayage,
**caractérisé en ce qu'**un deuxième dispositif de balayage incrémental (18b) en décalage de phase par rapport au premier dispositif de balayage incrémental (18a) et ayant au moins deux unités de balayage individuelles en décalage de phase mutuel génère des signaux de balayage respectifs en balayant l'étalon de mesure (14), et **en ce que** la deuxième information de position est générée à partir de la modulation du rapport cyclique des signaux de balayage du premier dispositif de balayage incrémental (18a) et de la modulation du rapport cyclique des signaux de balayage du deuxième dispositif de balayage incrémental (18b).
